# EUROPEAN PATENT SPECIFICATION

(11) **EP 0 626 353 B1**
(45) Date of publication and mention of the grant of the patent: **08.04.1998**
(21) Application number: 94107585.5
(22) Date of filing: 17.05.1994
(51) Int. Cl.: C03C 10/00, G11B 5/62

(54) **Glass-ceramic for a magnetic disk substrate and method for manufacturing the same**
Glaskeramik für Magnetplatten-Substrate und Verfahren zu ihrer Herstellung
Vitro-céramique pour substrat de disque magnétique et son procédé de fabrication

(30) Priority: 19.05.1993 JP 139989/93
(43) Date of publication of application: 30.11.1994
(60) Divisional application: 96108242.7
(73) Proprietor: KABUSHIKI KAISHA OHARA, Kanagawa-ken (JP)
(72) Inventor: Goto, Naoyuki, Sagamihara-shi, Kanagawa-ken (JP); Yamaguchi, Katsuhiko, Sagamihara-shi, Kanagawa-ken (JP)
(74) Representative: Jönsson, Hans-Peter, Dr.Dipl.-Chem.

(56) References cited:
- EP-A- 0 384 574
- DE-B- 1 248 244
- DE-B- 1 496 488
- US-A- 5 093 173
- PATENT ABSTRACTS OF JAPAN vol. 10, no. 226 (C-364) 7 August 1986 & JP-A-61 063 542 (HOYA CORP) 1 April 1986
- PATENT ABSTRACTS OF JAPAN vol. 011, no. 268 (C-444) 29 August 1987 & JP-A-62 072 547 (M. TOSHIMICHI ET AL) 3 April 1987
- PATENT ABSTRACTS OF JAPAN vol. 14, no. 472 (P-1116) 15 October 1990 & JP-A-02 187 922 (HITACHI LTD) 24 July 1990
- PATENT ABSTRACTS OF JAPAN vol. 10, no. 97 (P-446) 15 April 1986 & JP-A-60 229 234 (SUMITOMO TOKUSHIYU KINZOKU KK) 14 November 1985

## Description

This invention relates to a glass-ceramic having a crystal structure suitable for use as a material for a magnetic disk substrate and having improved surface characteristics after polishing and a method for manufacturing the same.

There has been a rapid progress in developments in magnetic disks demand for which has recently increased remarkably as external media of large scale computers and personal computers. Characteristics required generally for a magnetic disk substrate are as follows:
(1) In CSS (contact start and stop) characteristics of a magnetic disk, the magnetic disk should have not a completely smooth surface but a surface whose surface roughness (Ra) is controlled to a range from 15 Å to 50 Å in order to prevent stiction between the head and the disk and damage to the head and media.
(2) Since the amount of lifting of the head tends to decrease to the order of 0.1 µm to 0.05 µm owing to improvement of recording density of the magnetic disk, the surface of the disk must be flat and relatively smooth.
(3) The material of the magnetic disk substrate must not include anisotropic crystal or other defects and its structure must be dense, homogenious and fine.
(4) The material must have sufficient mechanical strength and hardness for standing a high speed rotation and contact with the head.
(5) The material must not contain Na₂O ingredient in principle because the Na₂O ingredient causes dispersion of sodium ion during the film forming process with resulting deterioration in characteristics of the film.
(6) The material must have chemical durability against rinsing and etching with various chemicals.

Aluminum alloy has been conventionally used as a material of magnetic disk substrate. The alluminum alloy substrate, however, tends to produce a substrate surface having projections or spot-like projections and depressions during the polishing process due to defects inherent in the material. As a result, the alluminum alloy substrate is not sufficient in flatness and surface roughness and cannot cope with the recent requirement for high density recording necessitated by increase in the amount of information.

As a material for overcoming this problem of the alluminum alloy substrate, known in the art is a glass substrate for magnetic disks made of chemically tempered glass. This glass substrate, however, has the following disadvantages:
(1) Polishing is made after chemical tempering and so the tempered layer tends to cause instability in thinning the disk substrate.
(2) For improving the CSS characteristics, the substrate must be subjected to mechanical or chemical processing for making texture. This prevents mass production of the product at a competitive cost.
(3) Since the Na₂O ingredient is included as an essential ingredient in the glass, the film forming characteristic of the glass is deteriorated with the result that a surface coating processing becomes necessary. It has recently been put into practice in the field of chemically tempered glass and crystallized glass-ceramic to make the surface of the glass rough during the polishing process for overcoming the problem of the texture processing for improving the CSS characteristics. This technique however is not sufficient either for realizing a stable mass production of the product at a competitive cost.

Aside from the alluminum alloy substrate and chemically tempered glass substrate, known also in the art are glass-ceramics which satisfy some of the above described requirements. For example, the SiO₂ - Al₂O₃ -Li₂O system crystallized glass-ceramic described in the Japanese Patent Application Laid-open No. Sho 60-229234 contains beta-quartz solid solution or beta-spodumene solid solution and has a grain diameter of crystal ranging from about 0.1 µm to about 1.0 µm. For another example, the SiO₂ - Li₂O system glass-ceramic described in the Japanese Patent Application Laid-open No. Sho 62-72547 contains lithium disilicate and lithium metasilicate as a main crystalline phase. The lithium disilicate phase has a plate-like crystal having a grain diameter of crystal in the range from about 0.3 µm to about 1.5 µm and the lithium metasilicate phase has a granular crystal having a grain diameter of crystal in the range from about 0.3 µm to about 0.5 µm. U.S. Patent No. 3,231,456 discloses a SiO₂ - Li₂O - P₂O₅ - MgO system glass-ceramic added with CuO and SnO ingredients in which lithium disilicate is grown as a main crystal phase and alpha-quartz may be grown as a sub crystal phase. Since, however, these glass-ceramics require a heat treatment for crystallization in a high temperature range from 850 °C to 1050 °C, they cannot grow a globular grain strucuture of aggregated particles as a grain structure of alpha-quartz as the glass-ceramic made according to the present invention as will be discussed in detail later. Besides, in U.S. Patent No. 3,231,456, the crystal phase and crystal structure are discussed for providing a ceramic material which is suitable for use as a bonding material. These glass-ceramics ceramics require the texture processings for making the surface of the glass-ceramics rough after the polishing process for improving the CSS characteristics which are essential for the material of a magnetic disk substrate.

For overcoming these problems, the Japanese Patent Application Laid-open No. Hei 2-247821 proposes a glass-ceramic containing a crystal phase having a texture of sheet-like or chain-like silicate. The anisotropic crystal of this glass-ceramic having an acicular or rod-shaped structure causes significant holes and pits with the result that a sufficient surface roughness cannot be obtained. Further, since the crystal of this glass-ceramic contains Na₂O ingredient, there occurs dispersion of sodium ions in the film forming process and this adversely affects the characteristics of the film.

DE-B-14 96 488 discloses a glass composition of the system Li₂O-SiO by the use of a phosphate as nucleating agent and teaches how to control crystal growth and therewith the size and the structure of crystals (Li-disilicate) within a glass of the Li₂O-SiO₂ system.

From patent abstract of Japan, Vol. 14, No. 472 (P-1116) October 15, 1990 it is known to use glass-ceramics of the Li₂O-SiO₂ system for magnetic disks and that the exhibit improved reliability.

It is, therefore, an object of the invention to provide a glass-ceramic for magnetic disk substrates which has eliminated the disadvantages of the prior art products and has excellent surface characteristics after polishing by controlling the crystal structure and crystal grain of a crystal produced. It is also an object of the invention to provide a method for manufacturing such a glass-ceramic.

Accumulated studies and experiments made by the inventors of the present invention for achieving the above described object of the invention have resulted in the finding, which has led to the present invention, that a glass-ceramic obtained by subjecting to heat treatment, within a specific temperature range, a base glass containing, as an essential ingredient, a MgO ingredient in the SiO₂ - Li₂O - P₂O₅ system has, as a crystal phase, alpha-quartz (alpha-SiO₂) whose aggregated particles (secondary grain) exhibit a globular grain structure and has excellent surface characteristics of a polished surface obtainable by controlling the surface characteristics by controlling the size of the crystal grain.

A glass-ceramic for a magnetic disk substrate achieving the above described object of the invention is formed by subjecting to heat treatment a base glass which consists of in weight percent:

| | | |
|---|---|---|
| SiO₂ | | 65 - 83% |
| Li₂O | | 8 - 11% |
| K₂O | | 0 - 7% |
| Mgo + ZnO + PbO | | 0.5 - 5.5% |
| in which | MgO | 0.5 - 5.5% |
| | ZnO | 0 - 4% |
| | PbO | 0 - 5% |
| P₂O₅ | | 1 - 4% |
| Al₂O₃ | | 0 - 7% |
| As₂O₃ + Sb₂O₃ | | 0 - 2% |

said glass-ceramic containing alpha-quartz (SiO₂) as a main crystal phase and lithium disilicate (Li₂O · 2SiO₂) as a sub crystal phase and a grown crystal grain of the alpha-quartz having a globular grain strucuture made of aggregated particles (secondary grain), said crystal grains of alpha-quartz being randomly scattered in the finer particles of lithium disilicate.

The composition of the glass-ceramic of the present invention is expressed on the basis of composition of oxides as in its base glass. The above described content ranges of the respective ingredients have been selected for the reasons stated below.

The SiO₂ ingredient is an important ingredient which produces alpha-quartz (SiO₂) as a main crystal phase and lithium disilicate (Li₂O · 2SiO₂) as a sub crystal phase by heat treating the base glass. If the amount of this ingredient is below 65%, the crystal produced in the glass-ceramic is instable and its texture tends to become too rough. If the amount of this ingredient exceeds 83%, difficulty arises in melting the base glass.

The Li₂0 ingredient is also an important ingredient which produces lithium disilicate (Li₂O · 2SiO₂) crystal as a sub crystal phase by heat treating the base glass. If the amount of this ingredient is below 8%, growth of this crystal becomes difficult and melting of the base glass becomes also difficult. If the amount of this ingredient exceeds 11%, the grown crystal of the glass-ceramic becomes instable and its texture tends to become too rough and, besides, chemical durability and hardness of the glass-ceramic are deteriorated.

The K₂O ingredient is an ingredient which improves melting property of the base glass and can be included up to 7%.

The MgO ingredient is an important ingredient which has been found in the present invention to cause a globular crystal grain of aggregated particles (secondary grain) of alpha-quartz (SiO₂) as the main crystal phase to grow randomly in the entire glass. If the amount of this ingredient is below 0.5%, the above described effect cannot be obtained whereas if the amount of this ingredient exceeds 5.5%, growth of a desired crystal becomes difficult.

The ZnO and PbO ingredients may also be added because they have a function similar to that of MgO. If the amounts of the ZnO or PbO ingredient exceed 4% and 5%, growth of a desired crystal becomes difficult.

For the same reason, the total amount of the MgO, ZnO and PbO ingredients should be within the range from 0.5 to 5.5%.

The P₂O₅ ingredient is an essential ingredient as nucleating agent for the glass-ceramic. If the amount of this ingredient is below 1%, a desired crystal cannot be produced whereas if the amount of this ingredient exceeds 4%, the grown crystal of the glass-ceramic becomes instable and too rough and, besides, its stability against devitrification is deteriorated.

The Al₂O₃ ingredient is an effective ingredient for improving chemical durability of the crystallized glass-ceramic. If the amount of this ingredient exceeds 7%, the melting property of the base glass is deteriorated and, as a result, the rate of crystal growth of alpha-quartz (alpha-SiO₂) as the main crystal phase is reduced.

The As₂O₃ and/or Sb₂O₃ ingredients may be added as refining agents in melting the base glass. It will suffice if the total amount of one or both of these ingredients up to 2% is added to the glass.

In addition to the above described ingredients, one or more of B₂O₃, CaO, SrO, BaO, TiO₂ and ZrO₂ ingredients may be added in a small amount within the range in which desired properties of the glass-ceramic according to the invention will not be impaired.

For manufacturing the glass-ceramic for a magnetic disk substrate according to the invention, the base glass having the above described composition is molten and after being subjected to heat forming and/or cold forming, is heat treated for producing a crystal nucleus under a temperature within a range from 450 C to 540 C and is further heat treated for crystallization under a temperature within a range from 700°C to 840°C.

If the temperature of nucleation is below 450°C, nucleation caused by phase separation due to the P₂O₅ ingredient is insufficient whereas if the temperature of nucleation exceeds 540°C the crystal obtained is instable and tends to become coarse.

The temperature of crystallization, associated with the effect caused by the MgO ingredient, performs a very important function for controlling the size of the globular grain of aggregated particles (secondary grain) of alpha-quartz (alpha-SiO₂). If the temperature of crystallization is below 700°C, the crystal of alpha-quartz will not grow sufficiently whereas if the temprature of crystallization exceeds 840°C, it becomes difficult to maintain the globular grain structure of aggregated particles (secondary grain) with resulting failure in obtaining the above described advantage of the invention. The glass-ceramic thus heat treated is then subjected to the lapping process and finally polishing process and the surface roughness (Ra) after final polishing comes within the range from 15Å to 50Å.

### Examples

Preferred examples of the glass-ceramic according to the invention will now be described. Table 1 shows examples (No. 1 to No. 10) of the glass-ceramic for a magnetic disk substrate according to the invention and comparative examples of the prior art SiO₂ - Li₂O - Al₂O₃ - P₂O₅ system and SiO₂ - Li₂O - MgO - P₂O₅ system glass-ceramics together with results of measurements of the temperatures of the heat treatment, the time of the heat treatment, the diameter of grown crystal grain of alpha-qaurtz, main crystal phases and surface roughness (Ra) after polishing. In the Table, α - Q represents alpha-quartz (SiO₂) and α - Cri represents alpha-cristobalite (SiO₂).

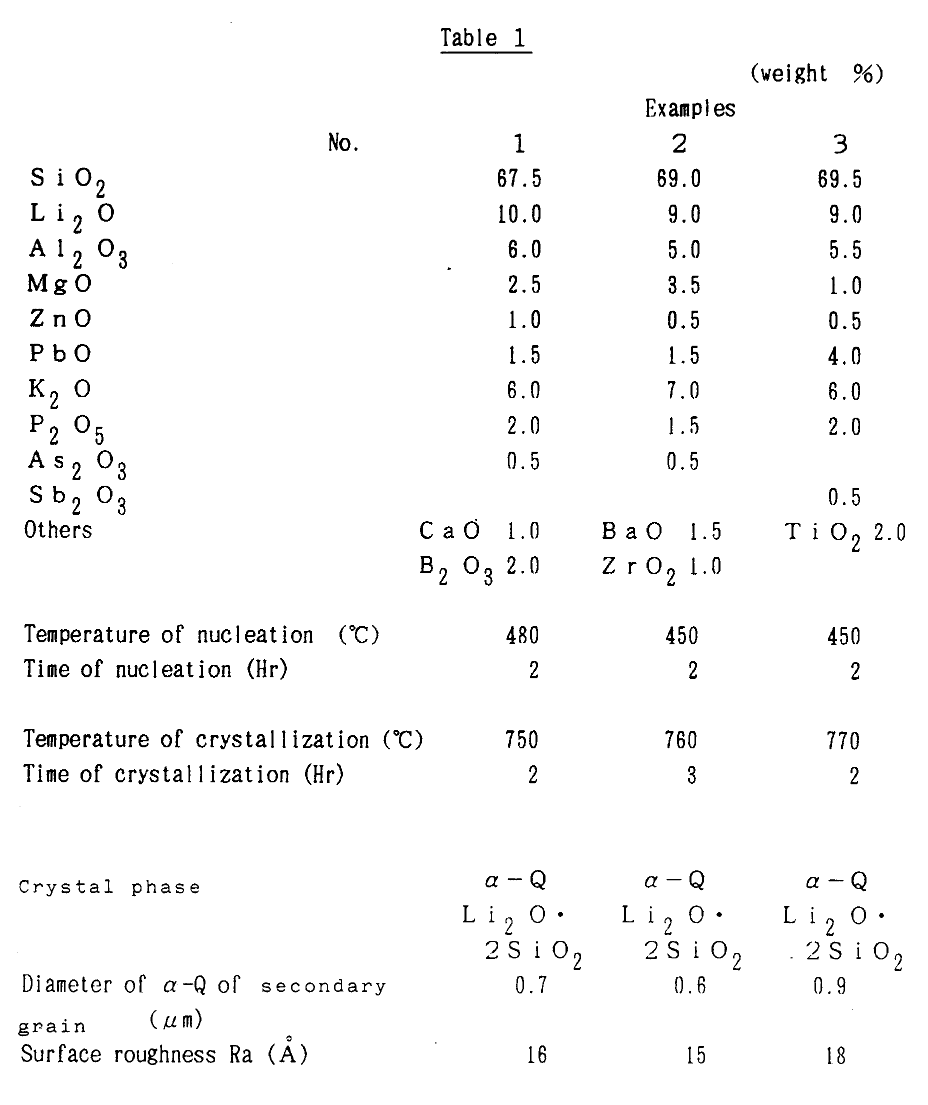

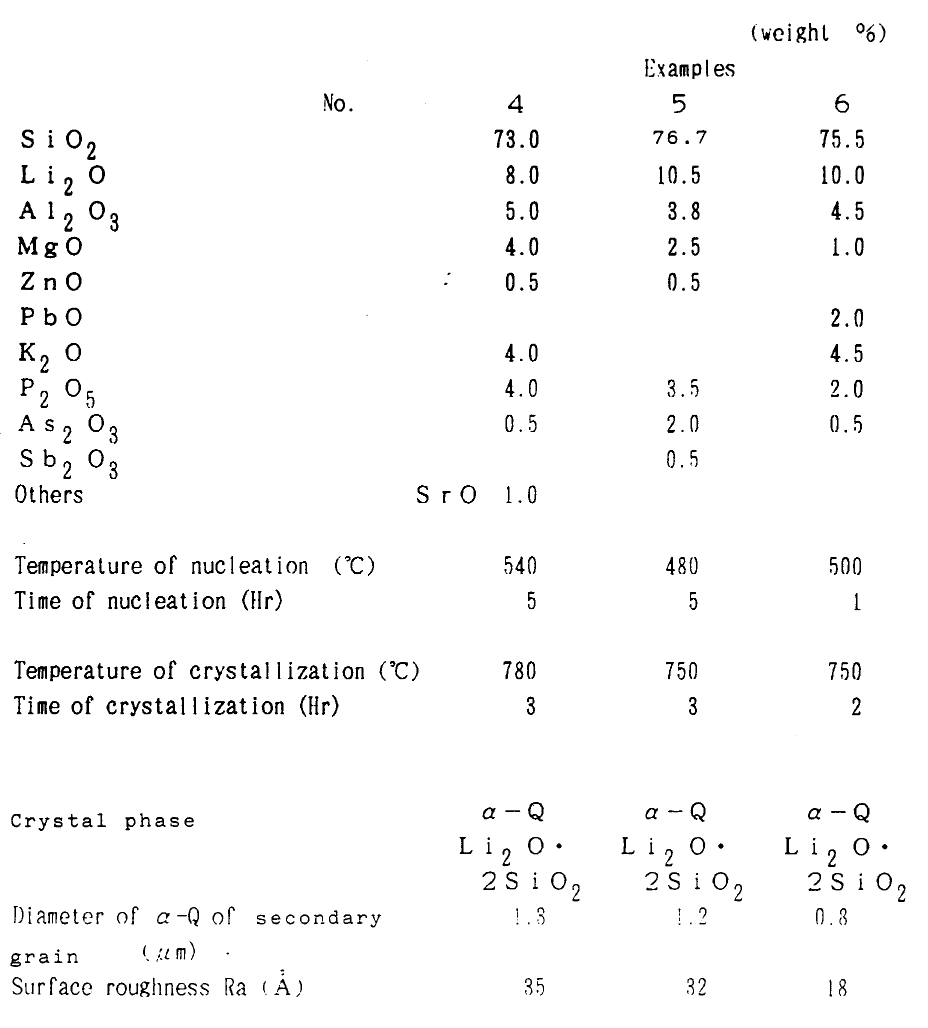

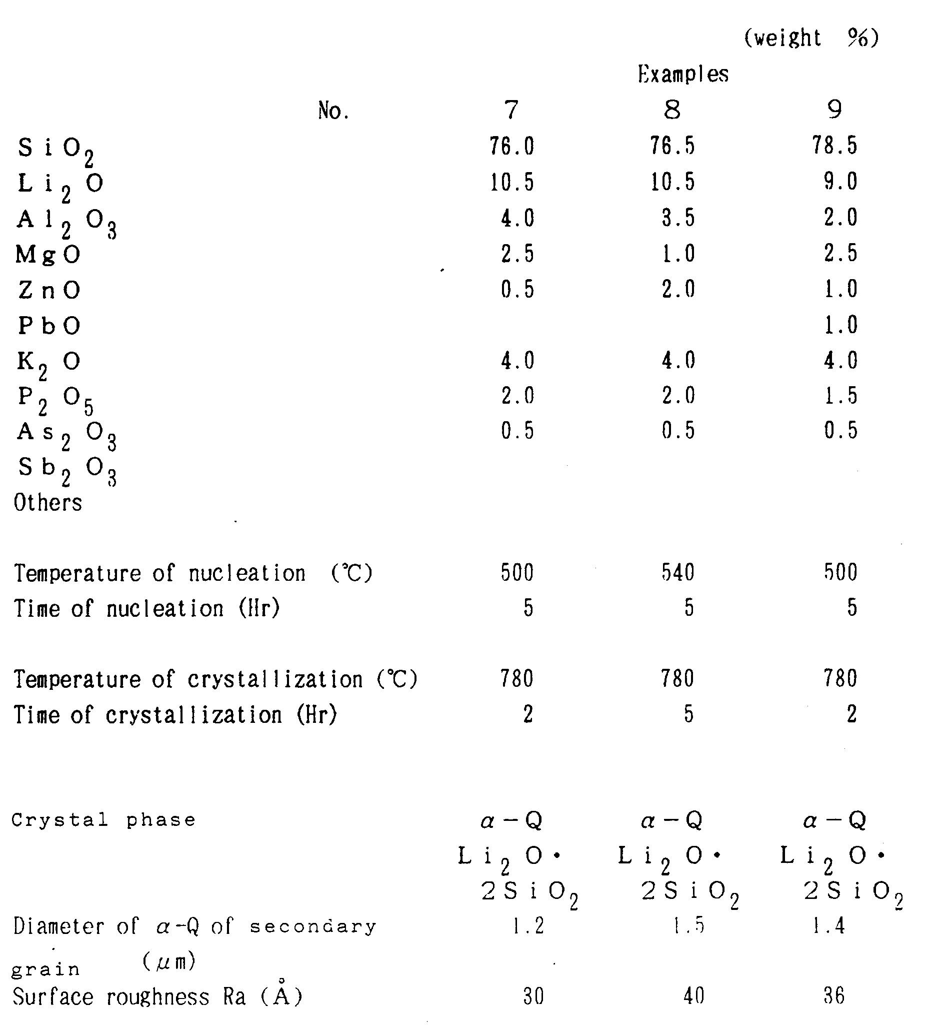

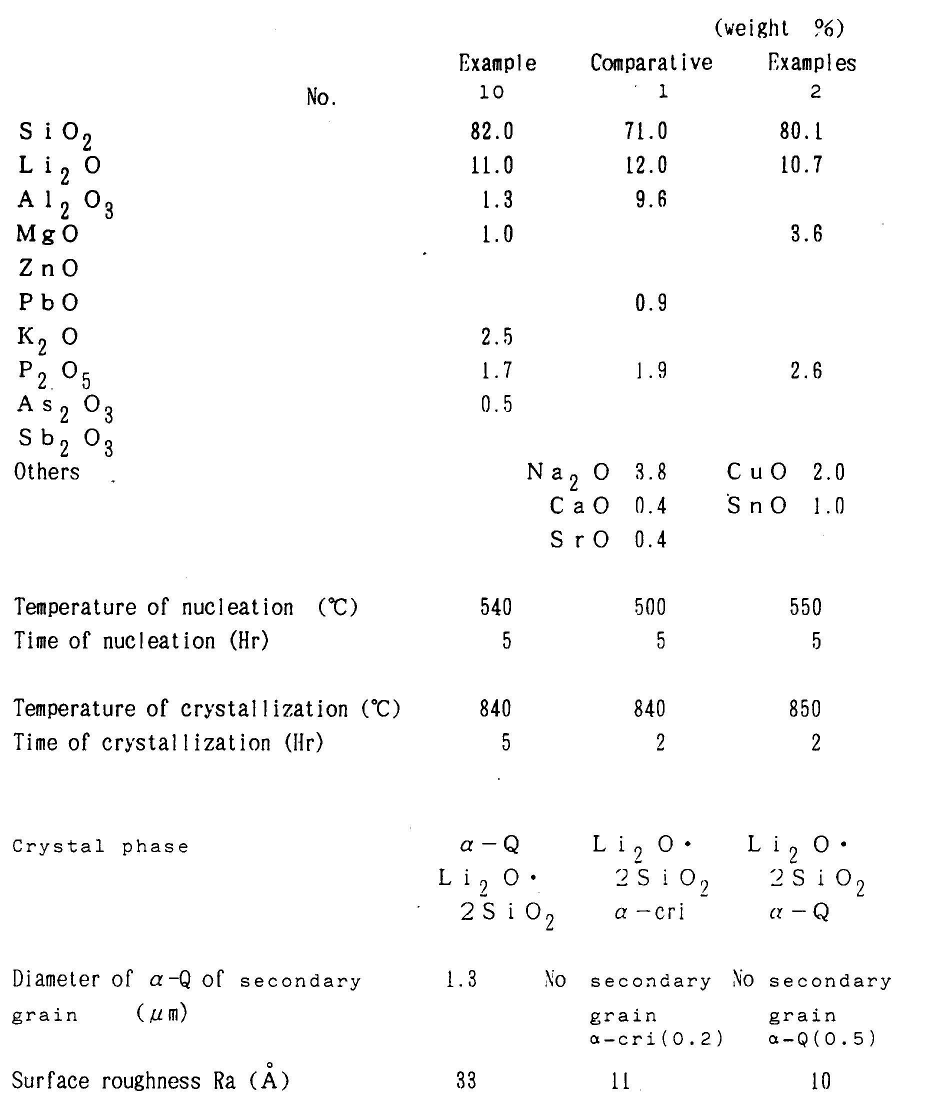

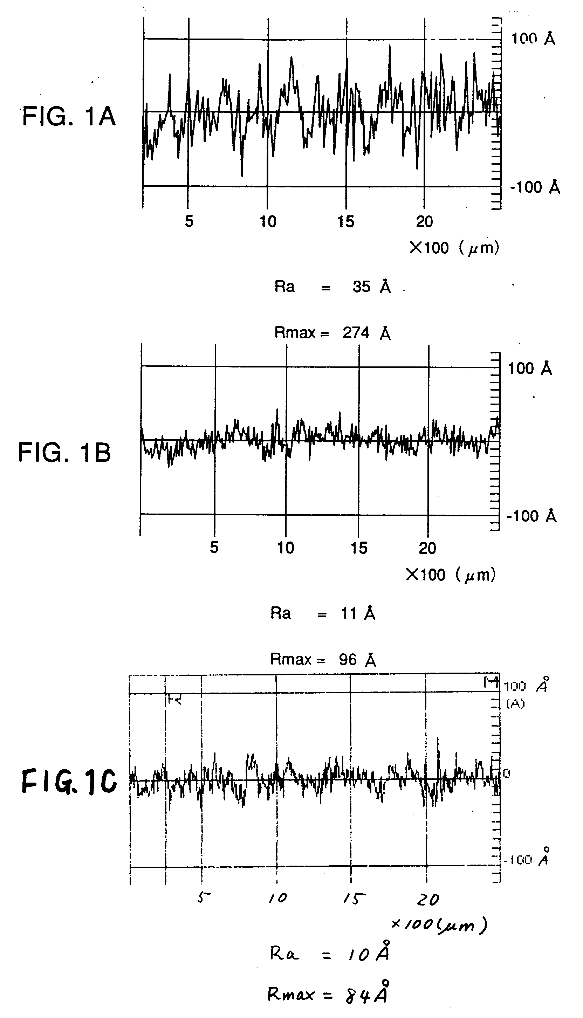

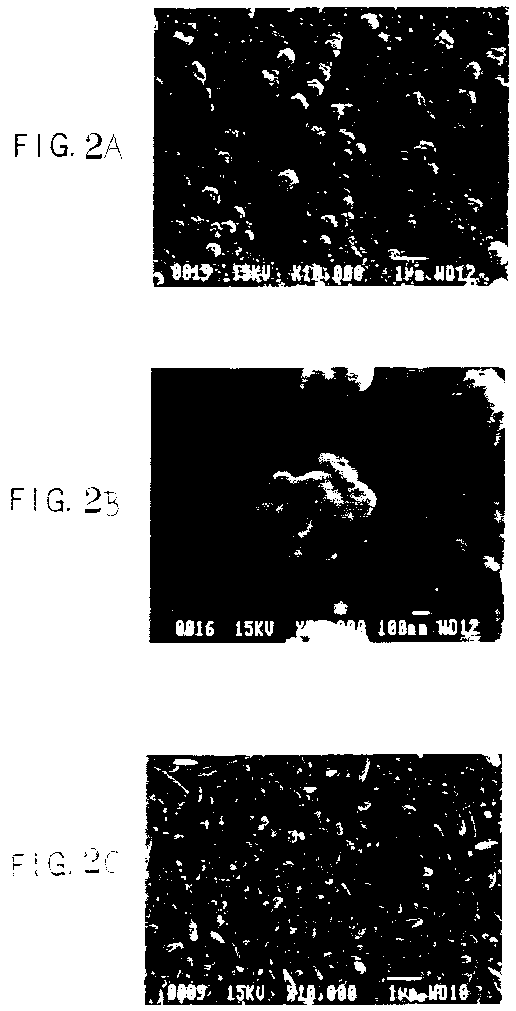

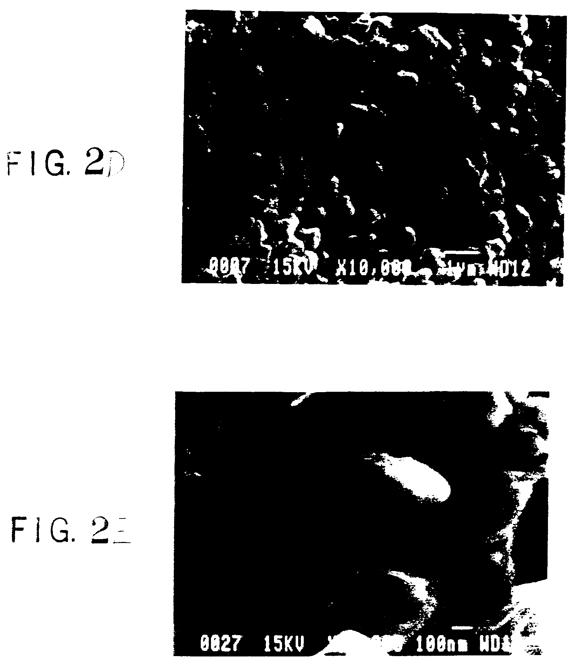

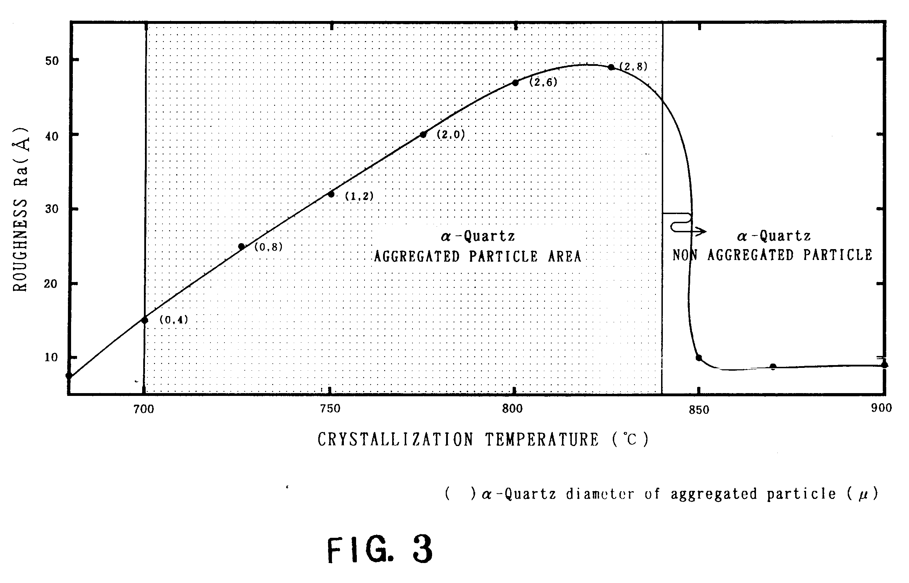

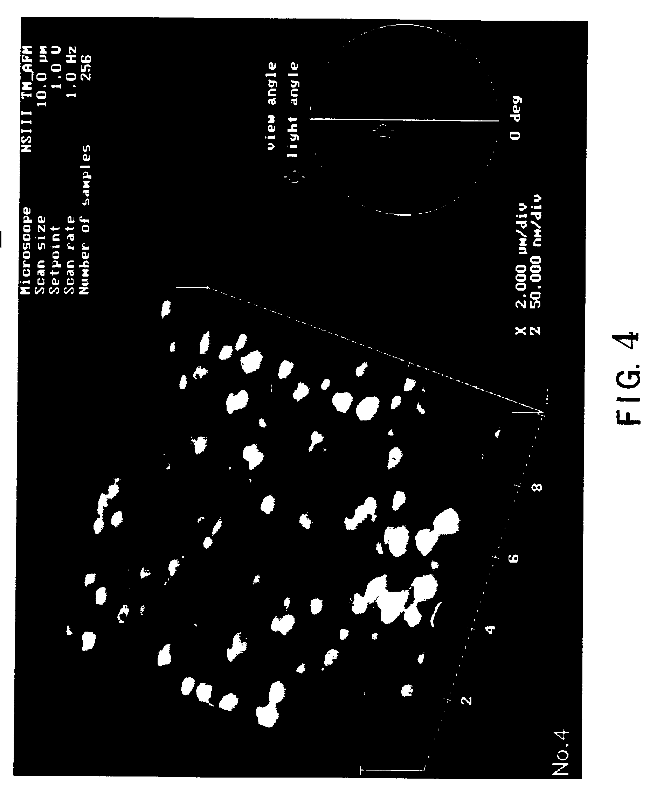

In the accompanying drawings, Fig. 1A shows the surface roughness (Ra) after polishing of the glass-ceramic of Example 4 in Table 1, Fig. 1B that of the glass-ceramic of the Compartive Example No. 1 in Table 1, and Fig. 1C that of the glass-ceramic of the Comparative Example No. 2 in Table 1 for comparison. Figs. 2A and 2B show SEM (scanning electron microscope images of the crystal structure after HF etching of the glass-ceramic of Example 4 and Fig. 2C that of the glass-ceramic of the Comparative Example No. 1 and Figs. 2D and 2E those of the glass-ceramic of the Comparative Example No. 2, respectively for comparison. Fig. 3 is a graph showing relationship between the temperature of crystallization and the surface roughness (Ra) of the aggregated particles of alpha-quartz in the glass-ceramic of Example No. 5. Fig. 4 is a three-dimentional image by AFM (atomic force microscope) of the glass-ceramic of the Example No. 5 having the surface roughness (Ra) of 32 A after polishing. It will be seen from Fig. 4 that the globular crystal grains each made of aggregated particles (secondary grain) of alpha-quartz form minute projections scattered over the entire surface of the magnetic disk substrate.

For manufacturing the glass-ceramics of the above descrbied examples, materials including oxides, carbonates and nitrates are mixed and molten in a conventional melting apparatus at a temperature within the range from about 1350°C to about 1500°C. The molten glass is stirred to homogenize it and thereafter formed into a desired shape and annealed to provide a formed glass. Then, this formed glass is subjected to heat treatment to produce the crystal nucleus under a temperature within the range from 450°C to 540°C for about one to five hours and then is subjected to further heat treatment for crystallization under a temperature within the range from 700°C to 840°C for about one to five hours to produce the desired glass-ceramic. In making a specimen for measuring the surface roughness (Ra), the above described glass-ceramic is lapped for about 10 to 20 minutes with grains having average grain diameters ranging from 9 µm to 12 µm and then is finally polished for about 30 to 40 minutes with cerium oxide having average grain diameters ranging from 1 µm to 2 µm.

As shown in Table 1, the glass-ceramic of Example No. 4 has the desired surface roughness but the glass-ceramics of the Comparative Examples Nos. 1 and 2 have no such desired surface roughness. As will be apparent from Figs. 1A, 1B and 1C, the glass-ceramic of Example No. 4 has a desired surface roughness but the glass-ceramic of the Comparative Examples Nos. 1 and 2 do not. As will be apparent from the SEM images of Figs. 2A, 2B and 2C, the alpha-quartz crystal grains of the glass-ceramic of Example No. 4 exhibit the globular grain structure of aggregated particles and are projecting from the surface of the glass-ceramic whereas the crystal grains of the Comparative Example No. 1 exhibit the acicular or rod-like grain structure and, accordingly, the desired surface roughness cannot be obtained. Further, as shown in Figs. 2D and 2E, the crystal grains of the Comparative Example No. 2 exhibit a non-aggregated mono-spherical structure in which a desired surface roughness cannot be obtained and the grain diamter cannot be controlled freely as in the applicant's invention as will be described more fully later. As to the grain diameter of the glass-ceramic according to the invention, the grain diameter can be controlled to the range from 0.3 µm to 3µm by varying heat treatment conditions.

Difference between the globular grain structure made of aggregated particles of alpha-quartz according to the applicant's invention and the non-aggregated mono-spherical grain structure of alpha-quartz of Comparative Example No. 2 will be described more fully below.

As will be apparent from the SEM images of the glass-ceramic of Example No. 4 shown in Fig. 2B, each of alpha-quartz grains of the present invention has a globular structure which is composed of many minute particles aggregated into a globe. These alpha-quartz grains are randomly scattered in the fine particles of lithium disilicate (Li₂O · 2SiO₂) as shown by Fig. 2A. This state has been found quite beneficial for controlling the surface roughness (Ra) after polishing as will be described below. In contrast, as will be seen from the scanning microscopic photographs of Figs. 2D and 2E, it has been confirmed by X-ray diffraction analysis that in the glass-ceramic of Comparative Example No. 2, the lithium disilicate (Li₂O · 2SiO₂) crystal grains and the alpha-quartz (alpha-SiO₂) crystal grains grow but distinction in the state of growing between these two different crystal grains is not so clear as in the glass-ceramic of the present invention and, besides, these two crystal grains do not assume definite shapes as in the glass-ceramic of the present invention.

The surface roughness control characteristics of the glass-ceramic made according to the invention are obtained by the specific crystal structure of the glass-ceramic of the invention in which the globular crystal grains each being formed of aggregated small particles of alpha-quartz which is inherently stronger than lithium disilicate physically and chemically are randomly scattered in the much smaller crystal grains of lithium disilicate. This specific structure causes the lithium disilicate grains to be ground more quickly than the alpha quartz grains and, as a result, the alpha-quartz grains come to project relatively prominently over the surface of the lithium disilicate grains as the polishing processing progresses whereby surface roughness (Ra) of a relatively large value can be obtained. It will be clearly seen from the three-dimentional image by AFM shown in Fig. 4 that the globular grains of aggregated small particles of physically and chemically strong alpha-quartz project randomly over the entire polished surface.

An additional advantage of the globular grain structure formed of aggregated particles (secondary grain) of alpha-qaurtz in the glass-ceramic according to the invention is that the grain diamteter can be variably controlled by changing the temperature of crystallization to such a degree that any desired grain diameter can be achieved. This is because growth of the crystal grain of alpha-quartz in the present invention depends largely upon the degree of aggregation of small particles and this aggregation depends upon the temperature of crystallization employed. Such fine control of the grain diameter can never be achieved in the prior art glass-ceramic of the Comparative Example No. 2 in which the crystal grains are mono-spherical and do not assume definite shapes.

In summing up, the glass-ceramic for magnetic disk substrate according to the invention is obtained by heat treating a SiO₂ - LiO₂ - P₂O₅ - MgO system glass of a specific composition range and, therefore, the main crystal phase thereof consists of alpha-quartz (alpha-SiO₂) and the lithium disilicate (Li₂O 2SiO₂). The grown crystal grain of alpha-quartz has a globular grain structure formed of aggregated particles (secondary grain) which facilitates control of the grain size by heat treatment and achievement of a desired surface roughness of the polished surface whereby the glass-ceramic according to the invention can be utilized as an excellent magnetic disk substrate.

According to the method for manufacturing the glass-ceramic according to the invention comprising the steps of melting and forming the above described base glass and then subjecting the formed glass to heat treatment for producing a crystal nucleus under a temperature within the range from 450°C and 540°C and then to a further heat treatment for crystallization under a temperature within a range from 700°C to 840°C, the glass-ceramic which has the globular grains formed of aggregated particles (secondary grain) and thereby has excellent characteristics can be manufactured at good yield.

## Claims

1. A glass-ceramic for a magnetic disk substrate formed by subjecting to heat treatment a base glass which consists of in weight percent:
| | | |
|---|---|---|
| SiO₂ | | 65 - 83% |
| Li₂O | | 8 - 11% |
| K₂O | | 0 - 7% |
| Mgo + ZnO + PbO | | 0.5 - 5.5% |
| in which | MgO | 0.5 - 5.5% |
| | ZnO | 0 - 4% |
| | PbO | 0 - 5% |
| P₂O₅ | | 1 - 4% |
| Al₂O₃ | | 0 - 7% |
| As₂O₃ + Sb₂O₃ | | 0 - 2% |
said glass-ceramic containing alpha-quartz (SiO₂) and lithium disilicate (Li₂O·2SiO₂) as main crystal phases and a grown crystal grain of alpha-quartz having a globular grain structure made of aggregated particles (secondary grain). Whereby said crystal grains of alpha-quartz being randomly scattered in the finer particles of lithium disilicate.

2. A glass-ceramic as defined in claim 1 wherein he size of the crystal grain of alpha-quartz can be controlled within a range from 0.3 µm to 3 µm and surface roughness (Ra) of a polished surface of the glass-ceramic can be controlled within a range from 15Å to 50Å.

3. A method for manufacturing a glass-ceramic for a magnetic disk substrate comprising steps of:
melting a base glass consisting of in weight percent
| | | |
|---|---|---|
| SiO₂ | | 65 - 83% |
| Li₂O | | 8 - 11% |
| K₂O | | 0 - 7% |
| Mgo + ZnO + PbO | | 0.5 - 5.5% |
| in which | MgO | 0.5 - 5.5% |
| | ZnO | 0 - 4% |
| | PbO | 0 - 5% |
| P₂O₅ | | 1 - 4% |
| Al₂O₃ | | 0 - 7% |
| As₂O₃ + Sb₂O₃ | | 0 - 2%; |
forming the molten glass into a desired shape;
subjecting the formed glass to heat treatment for producing a crystal nucleus under a temperature within a range from 450°C to 540°C; and
further subjecting the glass to heat treatment for crystallization under a temperature within a range from 700°C to 840°C.

## Patentansprüche

1. Glaskeramik für ein Magnetplatten-Substrat, die durch Einwirkung einer Wärmebehandlung auf ein Grundglas gebildet wird, das - in Gew.-% aus:
| | | |
|---|---|---|
| SiO₂ | | 65 - 83 % |
| Li₂O | | 8 - 11 % |
| K₂O | | 0 - 7 % |
| MgO + ZnO + PbO | | 0,5 - 5,5 %, |
| wobei | MgO | 0,5 - 5,5 % |
| | ZnO | 0 - 4 % |
| | PbO | 0 - 5 % |
| P₂O₅ | | 1 - 4 % |
| Al₂O₃ | | 0 - 7 % |
| As₂O₃ + Sb₂O₃ | | 0 - 2 % |
besteht, wobei die Glaskeramik α-Quarz (SiO₂) und Lithiumdisilicat (Li₂O·2 SiO₂) als Haupt-Kristallphasen und ein gewachsenes Kristallkorn von α-Quarz mit einer globulären Kornstruktur enthält, das aus aggregierten Teilchen (sekundäres Korn) hergestellt ist, wobei die Kristallkörner aus α-Quarz in den feineren Teilchen aus Lithiumdisilicat statistisch verteilt sind.

2. Glaskeramik nach Anspruch 1, wobei die Größe des Kristallkorns aus α-Quarz innerhalb eines Bereichs von 0,3 µm bis 3 µm geregelt werden kann und die Oberflächen-Rauheit (Ra) einer polierten Oberfläche der Glaskeramik innerhalb eines Bereichs von 15 Å bis 50 Å geregelt werden kann.

3. Verfahren zur Herstellung einer Glaskeramik für ein Magnetplatten-Substrat, umfassend die Schritte des: Schmelzens eines Grundglases, bestehend - in Gew.-% aus:
| | | |
|---|---|---|
| SiO₂ | | 65 - 83 % |
| Li₂O | | 8 - 11 % |
| K₂O | | 0 - 7 % |
| MgO + ZnO + PbO | | 0,5 - 5,5 %, |
| wobei | MgO | 0,5 - 5,5 % |
| | ZnO | 0 - 4 % |
| | PbO | 0 - 5 % |
| P₂O₅ | | 1 - 4 % |
| Al₂O₃ | | 0 - 7 % |
| As₂O₃ + Sb₂O₃ | | 0 - 2 %; |
Formens des geschmolzenen Glases in eine erwünschte Form; Einwirkenlassens einer Wärmebehandlung auf das geformte Glas zur Erzeugung eines Kristallisationskeims bei einer Temperatur im Bereich von 450 °C bis 540 °C und des weiteren Einwirkenlassens der Wärmebehandlung auf das Glas zur Kristallisation bei einer Temperatur im Bereich von 700 °C bis 840 °C.

## Revendications

1. Vitrocéramique pour un substrat de disque magnétique formé en soumettant à un traitement thermique un verte de base qui renferme, en pourcentage en poids :
| | | |
|---|---|---|
| SiO₂ | | 65 à 83% |
| Li₂O | | 8 à 11% |
| K₂O | | 0 à 7% |
| MgO + ZnO + PbO | | 0,5 à 5,5% |
| où | MgO | 0,5 à 5,5% |
| | ZnO | 0 à 4% |
| | PbO | 0 à 5% |
| P₂O₅ | | 1 à 4% |
| Al₂O₃ | | 0 à 7% |
| As₂O₃ + Sb₂O₃ | | 0 à 2% |
ladite vitrocéramique contenant du quartz alpha (SiO₂) et du disilicate de lithium (Li₂O 2SiO₂) comme phases cristallines principales et un grain de cristal développé de quartz alpha présentant une structure de grain globulaire constituée de particules agglomérées (grain secondaire), si bien que, lesdits grains de cristal de quartz alpha sont dispersés de manière aléatoire dans les particules plus fines de disilicate de lithium.

2. Vitrocéramique selon la revendication 1, dans laquelle la taille du grain de cristal de quartz alpha peut être contrôlée dans la plage de 0,3 µm a 3 µm et la rugosité de surface (Ra) d'une surface polie de la vitrocéramique peut être contrôlée dans une plage de 15Å à 50Å.

3. Procédé de fabrication d'une vitrocéramique pour un substrat de disque magnétique comprenant les étapes de:
fusion d'un verte de base renfermant, en pourcentage en poids,:
| | | |
|---|---|---|
| SiO₂ | | 65 à 83% |
| Li₂O | | 8 à 11% |
| K₂O | | 0 à 7% |
| MgO + ZnO + PbO | | 0,5 à 5,5% |
| où | MgO | 0,5 à 5,5% |
| | ZnO | 0 à 4% |
| | PbO | 0 à 5% |
| P₂O₅ | | 1 à 4% |
| Al₂O₃ | | 0 à 7% |
| As₂O₃ + Sb₂O₃ | | 0 à 2% |
mise en forme du verte fondu à la forme désirée;
réalisation d'un traitement thermique sur le verte mis en forme afin de produire un noyau cristallin sous une température comprise dans une plage de 450°C à 540°C; et
réalisation d'un autre traitement thermique sur le verte pour obtenir la cristallisation sous une température comprise dans une plage de 700°C à 840°C.
